# FASCICULE DE BREVET EUROPEEN

(11) **EP 3 376 063 B1**
(45) Date de publication et mention de la délivrance du brevet: **06.11.2019**
(21) Numéro de dépôt: 18157551.5
(22) Date de dépôt: 20.02.2018
(51) Int. Cl.: F16F 7/10, F16F 7/116, F16F 7/104, B64C 27/00

(54) **DISPOSITIF DE SUSPENSION ANTIVIBRATOIRE D'UN ELEMENT MECANIQUE, ET AERONEF**
SCHWINGUNGSDÄMPFENDE AUFHÄNGUNGSVORRICHTUNG EINES MECHANISCHEN ELEMENTS, UND ENTSPRECHENDES LUFTFAHRZEUG
AN ANTI-VIBRATION SUSPENSION DEVICE FOR A MECHANICAL ELEMENT, AND AN AIRCRAFT

(30) Priorité: 16.03.2017 FR 1770256
(43) Date de publication de la demande: 19.09.2018
(73) Titulaire: Airbus Helicopters, 13725 Marignane Cedex (FR)
(72) Inventeur: JOUVE, Jérémy, 13560 SENAS (FR)
(74) Mandataire: GPI & Associés

(56) Documents cités:
- EP-A1- 1 531 372
- WO-A1-2006/083295
- WO-A1-2012/106616
- FR-A1- 2 747 098
- FR-A1- 3 010 386

## Description

La présente invention concerne un dispositif de suspension antivibratoire d'un élément mécanique, notamment d'un aéronef. La présente invention relève des mécanismes visant à réduire un niveau vibratoire. En particulier, l'invention vise des mécanismes destinés à des aéronefs, tels que des giravions par exemple.

En effet, les giravions sont par nature soumis à des vibrations notamment générées de façon naturelle par une voilure tournante du giravion.

Pour au moins limiter ces vibrations, un dispositif de suspension antivibratoire peut comprendre un absorbeur de vibrations de type résonateur. Un résonateur produit un effet antirésonance à une fréquence dite « fréquence d'antirésonance ».

Un résonateur comporte classiquement un batteur qui est muni d'une masse dénommée « masse battante » portée par un support de masse. Le support de masse est alors relié à une structure vibrante et à une structure à isoler, et peut être couplé à une liaison souple. Lorsque la structure vibrante est soumise à des vibrations, le résonateur est ainsi excité par cette structure vibrante. Il en résulte un battement du batteur destiné à contrecarrer les vibrations de la structure vibrante.

Pour optimiser l'efficacité du résonateur, la fréquence d'antirésonance du résonateur est accordée sur la fréquence de l'excitation dynamique de la structure vibrante à amortir, dite plus simplement « fréquence d'excitation ». Lorsque la structure vibrante est excitée, la masse battante vibre, diminuant alors le niveau vibratoire exercé sur la structure à isoler.

Par exemple, les giravions sont munis d'au moins un rotor principal lié à une cellule. Ce rotor principal participe au moins partiellement à la sustentation voire à la propulsion de l'aéronef.

Le rotor principal est entraîné en rotation par une installation motrice comprenant au moins un moteur relié mécaniquement à une boîte de transmission de puissance. La boîte transmission de puissance est en outre munie d'un mât rotor relié à la tête du rotor principal. Dès lors, au moins un moteur met en mouvement la boîte de transmission de puissance, cette boîte de transmission de puissance entraînant alors la rotation du rotor principal.

La boîte de transmission de puissance est fixée à un plancher, dit « plancher mécanique », de la cellule par des éléments de fixation. De tels éléments de fixation peuvent inclure des barres de suspension articulées à un sommet de la boîte de transmission de puissance.

Dès lors, un résonateur peut être interposé entre chaque barre de suspension et le plancher mécanique. Par exemple, un tel résonateur comporte une masse battante qui est portée par un support de masse. Le support de masse s'étend longitudinalement d'une première extrémité portant la masse battante vers une deuxième extrémité. La deuxième extrémité peut être reliée directement ou indirectement d'une part à une barre de suspension et d'autre part au plancher mécanique.

De plus, le résonateur peut comprendre un organe élastique apportant de la raideur, et notamment une lame.

Ainsi, le support de masse est par exemple fixé à une lame élastique qui est articulée à la boîte de transmission de puissance.

Suivants d'autres variantes, d'autres types d'organes élastiques sont employés, tel qu'un élément torsible par exemple.

Lorsque la boîte de transmission de puissance est soumise à des excitations de fréquences d'excitation kbΩ multiples de la fréquence de rotation Ω du rotor ainsi que du nombre de pales b et d'un nombre entier k, le batteur effectue un mouvement de battement. Ce mouvement de battement tend à générer une antirésonance à la fréquence d'excitation pour tendre à annuler localement les efforts dynamiques exercés.

Sur un résonateur dit « passif » la masse battante est immobilisée en vol par rapport au support de masse.

Une des difficultés soulevée par un tel résonateur réside dans le réglage optimal du système pour que la fréquence d'antirésonance soit notamment effective afin de produire les effets souhaités.

Avec un résonateur passif, la masse battante est solidarisée au support de masse. Le réglage du résonateur peut être réalisé au sol en modifiant la masse, en tant que telle, de la masse battante ou sa position sur le support de masse. Ce réglage est réalisé en effectuant un compromis entre différentes conditions de vol et/ou différentes configurations de l'aéronef, afin de tendre à assurer des performances acceptables sur tout le domaine de vol.

En effet, le système est efficace pour une fréquence d'excitation donnée, bΩ par exemple. Cependant, la fréquence d'excitation peut évoluer, en fonctions des différentes configurations de vol d'un giravion. En particulier, cette évolution peut se produire sur une période bien supérieure à la période de l'excitation.

Ce réglage d'un résonateur passif est donc délicat à réaliser sur des giravions munis d'un rotor dont la vitesse de rotation est variable.

Comme tout système résonant, le résonateur peut posséder une plage relativement étroite de fréquences d'amplification et d'antirésonance. Ainsi, un faible décalage entre la fréquence d'antirésonance et la fréquence d'excitation du rotor, par exemple causé par une variation de la vitesse de rotation du rotor principal, peut réduire l'efficacité du résonateur.

Certains résonateurs sont dits « semi-actifs ». Par rapport à un résonateur passif, la masse battante est rendue mobile par rapport au support de masse dans la direction principale dite « longitudinale » du support de masse. Un unique actionneur peut ainsi déplacer en translation la masse battante sur le support de masse pour modifier un bras de levier du batteur.

Un résonateur semi-actif permet, en vol, de déplacer en translation une masse battante par rapport à un batteur pour permettre au résonateur de traiter des phénomènes vibratoires se produisant à diverses fréquences.

Le réglage du résonateur se fait donc par la translation de la masse battante qui est mobile le long du support de masse. Ce déplacement permet notamment de modifier la position du centre de gravité du résonateur, et de modifier la réponse vibratoire du résonateur suite à une sollicitation.

Le document FR 2961570 propose un résonateur muni d'une masse principale et d'une masse auxiliaire qui sont montées sur un support. La masse auxiliaire est agencée dans un carter qui est fixé à la masse principale. La masse auxiliaire comporte un organe fileté agencé autour d'une vis de manoeuvre à l'intérieur du carter. Un moyen de manœuvre manuel en prise avec la vis de manœuvre permet d'entraîner en rotation la vis de manœuvre pour déplacer la masse auxiliaire en translation le long de cette vis de manœuvre.

Le document FR 2739670 décrit un résonateur muni d'une masse de réglage mobile en translation. La masse de réglage comprend deux sous-ensembles coaxiaux.

La masse de réglage est guidée en translation par des patins poussés par des ressorts contre un carter. Ces patins s'étendent selon une génératrice de la masse de réglage, à savoir sensiblement parallèlement à l'axe de translation de la masse de réglage.

Selon le document FR 3054277, un résonateur est muni d'un organe pesant comprenant un carter fixé à une lame élastique. L'organe pesant comprend un ensemble massique qui est mobile en translation dans ledit carter selon une direction longitudinale. Une vis sans fin entraînée par un moyen d'entraînement est engagée dans un écrou de coulissement dudit ensemble massique. L'ensemble massique comporte deux masses coulissant respectivement dans deux espaces cylindriques du carter. Chaque masse présente au moins deux moyens de pression interposés entre cette masse et le carter, chaque moyen de pression comprenant une gorge ménagée dans une circonférence d'une masse , chaque moyen de pression comprenant au moins un organe élastique disposé dans ladite gorge et une bague fendue plaquée contre le carter par ledit au moins un organe élastique du moyen de pression.

Les documents FR 2747098 et US 4.405.101 décrivent un dispositif muni d'une masse battante qui peut être déplacée en translation
Indépendamment de sa réalisation, un résonateur semi-actif permet de déplacer la masse battante sur le support de masse. Ce déplacement permet de modifier la géométrie du résonateur pour faire tendre la fréquence d'antirésonance vers la fréquence d'excitation de la structure vibrante reliée au résonateur.

Un résonateur semi-actif permet alors de contrer des excitations se produisant à une fréquence variable. Cependant, le résonateur semi-actif se comporte finalement comme un résonateur passif dont le réglage peut être adapté en régime quasi-statique. Ce mode de fonctionnement passif peut limiter les performances d'isolation de ce résonateur, malgré un réglage optimal.

Certains résonateurs sont dits « actifs ». La masse battante est immobile par rapport au support de masse du batteur. Par contre, un résonateur actif comporte un actionneur générant un effort dynamique exercé sur le batteur. Le mouvement du batteur résulte d'une première excitation provoquée par la structure vibrante reliée au résonateur et d'une deuxième excitation provoquée par l'actionneur.

L'effort dynamique introduit par l'actionneur peut permettre de pallier la perte d'efficacité liée à un décalage entre la fréquence d'antirésonance et la fréquence d'excitation de la structure vibrante reliée au résonateur.

Un résonateur actif permet d'atteindre des performances d'isolation vibratoire intéressantes, grâce à l'ajout d'un effort dynamique sur le batteur inertiel.

Toutefois, l'énergie à fournir à l'actionneur pour mouvoir le batteur peut s'avérer très importante, en particulier en présence d'un écart important entre la fréquence d'antirésonance du résonateur et la fréquence d'excitation de la structure vibrante.

Les documents FR 3010386, WO 2012/106616 et WO 2006/083295 présentent un dispositif de suspension antivibratoire muni d'un résonateur actif.

Les documents US 2013/233.998 et EP 1531372 sont aussi connus, le document US 2013/233.998 présentant divers résonateurs munis d'un actionneur.

La présente invention a alors pour objet de proposer un dispositif de suspension comprenant un moyen de suspension de type résonateur innovant.

L'invention vise alors un dispositif de suspension antivibratoire destiné à un ensemble mécanique, tel qu'une boîte de transmission de puissance par exemple.

Le dispositif de suspension est muni d'au moins un moyen de suspension, tel qu'un résonateur. Le moyen de suspension comprend un batteur effectuant un mouvement de balancier, le batteur comprenant un support de masse qui s'étend longitudinalement, le support de masse étant destiné à être directement ou indirectement relié à une structure porteuse à isoler et audit ensemble mécanique, le batteur comprenant une masse battante portée par le support de masse, le moyen de suspension comportant au moins un premier actionneur générateur d'efforts dynamiques qui est destiné à générer un effort dynamique pour agir sur le mouvement de balancier du batteur, le dispositif de suspension ayant au moins un premier calculateur pour contrôler le premier actionneur, le premier calculateur étant relié à un système de mesure mesurant une réponse vibratoire pour régler le mouvement de balancier.

De plus, la masse battante est mobile en translation longitudinalement par rapport au support de masse, le dispositif de suspension comportant un deuxième actionneur, le deuxième actionneur étant relié à la masse battante pour déplacer longitudinalement la masse battante par rapport au support de masse, le dispositif de suspension comprenant un deuxième calculateur contrôlant ledit deuxième actionneur pour régler une position de la masse battante par rapport au support de masse.

Le premier actionneur comporte au moins un organe aimanté et au moins une bobine électrique, ledit organe aimanté ou ladite bobine étant solidaire de la masse battante.

Le terme « batteur » désigne notamment un ensemble d'organes réalisant un mouvement de battement sous l'impulsion de l'ensemble mécanique. Le batteur comprend au moins un support de masse portant directement ou indirectement une masse battante.

Le moyen de suspension peut de plus comporter un élément élastique apportant de la raideur à ce moyen de suspension. Par exemple, un élément élastique de type lame peut s'étendre entre le batteur et l'ensemble mécanique, ou peut être articulée à la structure porteuse ainsi qu'à l'ensemble mécanique tout en portant le batteur.

L'expression « support de masse » désigne notamment un organe allongé longitudinalement qui réalise un mouvement de battement sous l'impulsion de l'ensemble mécanique voire du premier actionneur. Le support de masse peut prendre la forme d'un levier par exemple. Ce levier peut comprendre au moins une barre pleine ou peut comporter divers organes formant par exemple une structure en H.

L'expression « masse battante » désigne un organe pesant comprenant au moins un solide porté par le support de masse.

Par ailleurs, le premier calculateur et le deuxième calculateur peuvent former des organes électroniques distincts ou peuvent faire partie d'un même équipement. Par exemple, le premier calculateur et le deuxième calculateur peuvent former des cartes électroniques d'un même ordinateur, ou peuvent former des portions d'une même carte électronique, ou encore peuvent être représentés par des segments de code mémorisés dans une mémoire.

Dès lors, le moyen de suspension est muni d'un premier actionneur qui exerce un effort dynamique sur le batteur, à savoir sur le support de masse et/ou la masse battante par exemple. Le premier actionneur régule ainsi le mouvement de battement de ce batteur, à savoir la phase et/ou l'amplitude du mouvement en appliquant un effort dynamique sur le batteur.

Le mouvement de battement du batteur résulte alors d'une première excitation provoquée par l'ensemble mécanique et d'une deuxième excitation provoquée par le premier actionneur.

Le premier actionneur permet ainsi, grâce à cet effort dynamique introduit sur le batteur, de pallier une perte d'efficacité du dispositif de suspension selon l'invention liée à un décalage entre la fréquence d'antirésonance du moyen de suspension et la fréquence d'excitation de l'ensemble mécanique relié au dispositif de suspension.

De plus, le moyen de suspension comporte un deuxième actionneur qui peut déplacer la masse battante le long du support de masse, à savoir par exemple dans la direction principale du support de masse.

Le premier actionneur peut être imbriqué dans la masse battante par exemple. Le deuxième actionneur peut être porté par le support de masse. De la sorte, le deuxième actionneur peut déplacer en partie le premier actionneur le long du support de masse lors du déplacement de la masse battante,

Le moyen de suspension peut ainsi présenter les avantages d'un résonateur semi-actif mais aussi les avantages d'un résonateur actif. Le premier actionneur peut en effet permettre d'améliorer les performances de la suspension via une solution active absente dans un résonateur semi-actif. Le premier calculateur peut par exemple réguler l'effort exercé par le premier actionneur sur le batteur en fonction du niveau des vibrations subies dans une cabine pour optimiser le confort d'occupants. Le deuxième actionneur peut permettre d'adapter la position du centre de gravité du batteur, par exemple pour minimiser la consommation énergétique du premier actionneur.

En effet, lorsque la fréquence des vibrations à traiter varie de manière relativement importante, le premier actionneur consomme une importante énergie électrique pour minimiser ces vibrations. Pour réduire cette consommation d'énergie, le deuxième actionneur déplace alors la masse battante le long du support de masse afin de minimiser les efforts à générer avec le deuxième actionneur.

Par exemple, lorsque la vitesse de rotation d'un rotor source de vibrations varie, le deuxième actionneur déplace la masse battante le long du support de masse. L'énergie à fournir au premier actionneur pour minimiser les vibrations est alors minimisée.

Cette architecture tend à corriger les deux défauts des résonateurs usuels. Le manque de performance d'un résonateur semi-actif peut être corrigé par l'utilisation, éventuellement en permanence, d'un premier actionneur qui représente une partie active du système. En outre, la consommation énergétique du premier actionneur en bord de domaine peut être réduite au regard d'un résonateur actif usuel, du fait du réglage optimal assuré par le deuxième actionneur en permanence durant le vol.

L'intégration de deux actionneurs au lieu d'un actionneur selon des arts antérieurs pourrait tendre à rendre délicate cette application au premier abord, notamment en termes de masse et d'encombrement. Cependant, un résonateur nécessite l'utilisation d'une masse inerte importante dite « masse battante » en bout de support de masse. Le premier actionneur et le deuxième actionneur peuvent apporter une partie de cette masse sans représenter une masse morte. De plus, l'optimisation du fonctionnement du premier actionneur à l'aide du deuxième actionneur induit une limitation de la consommation énergétique du premier actionneur. Le premier actionneur peut ainsi être éventuellement sous-dimensionné, au regard d'un résonateur actif usuel, ce qui peut permettre de réduire son dimensionnement.

Dès lors, le moyen de suspension est un résonateur muni d'un premier actionneur agissant activement sur le batteur pour minimiser des vibrations, le résonateur ayant un deuxième actionneur déplaçant une masse battante le long du support de masse pour minimiser l'énergie consommée par le premier actionneur. Cette architecture diffère des architectures utilisant un unique actionneur soit pour déplacer une masse afin de lutter contre des vibrations sur une large plage de fréquences soit pour générer un effort sur un batteur.

Le dispositif de suspension peut de plus comporter une ou plusieurs des caractéristiques qui suivent, éventuellement combinées les unes avec les autres.

Par exemple, le premier actionneur peut comporter un organe dit « organe mobile » et un organe dit « organe fixe », l'organe mobile étant intégré à la masse battante de manière à être solidaire en translation de la masse battante, l'organe fixe étant destiné à ne pas battre avec le support de masse et la masse battante.

Le terme « intégré » signifie que l'organe mobile est une partie de la masse battante. Le terme « mobile » fait alors référence au déplacement de la masse battante et donc de l'organe mobile le long du support de masse. A l'inverse, l'organe fixe n'appartient pas à la masse battante et ne se déplace pas conjointement avec la masse battante.

Dès lors, le premier actionneur agit sur le batteur par l'entremise de la masse battante.

Par exemple, la bobine est solidarisée à une boîte de transmission de puissance et l'organe aimanté est une partie de la masse battante. Ainsi, la masse battante peut comprendre un solide magnétique, ou un solide amagnétique et au moins un aimant.

La bobine peut comprendre un solénoïde qui est muni d'un enroulement de fils électriquement conducteurs et d'un noyau. La bobine est alimentée électriquement par un courant électrique sur ordre et sous le contrôle du premier calculateur.

Par exemple, la masse battante peut comporter au moins un solide coulissant longitudinalement le long de la bobine, le solide comprenant l'organe aimanté, l'organe aimanté étant positionné en regard de la bobine.

Eventuellement, le solide peut présenter au moins une ouverture traversée de part en part par un tronçon longitudinal de la bobine.

Le solide peut coulisser selon la direction d'extension du tronçon longitudinal, éventuellement sans interférence avec ce tronçon longitudinal.

L'ouverture peut être ouverte longitudinalement selon deux sens, et délimitée par la masse battante transversalement et en élévation.

Par exemple, la bobine peut décrire une boucle fermée autour d'un espace vide en présentant deux tronçons longitudinaux reliés par deux branches transversales, le solide présentant au moins deux ouvertures séparées transversalement par une cloison du solide, les deux tronçons longitudinaux traversant respectivement lesdites deux ouvertures en étant disposés transversalement de part et d'autre de la cloison.

La bobine a par exemple une forme de O pour traverser deux ouvertures distinctes de la masse battante.

Par ailleurs, un dit organe aimanté comprenant une face aimantée de la masse battante, au moins une dite ouverture est délimitée au moins partiellement par au moins une dite face aimantée.

La masse battante comporte alors au moins une face aimantée qui forme un organe mobile et aimanté du premier actionneur en regard de la bobine.

Par ailleurs, ladite au moins une ouverture peut s'étendre en élévation sur une hauteur minimale et ladite bobine peut s'étendre en élévation sur une dimension en élévation maximale, ladite hauteur minimale étant supérieure à la somme de la dimension en élévation maximale et d'un débattement en élévation prédéterminé du support de masse.

L'expression « hauteur minimale » désigne la plus petite hauteur de l'ouverture selon une direction en élévation sensiblement perpendiculaire à la direction de déplacement de la masse battante. Eventuellement, l'ouverture peut avoir une hauteur constante.

L'expression « dimension en élévation maximale » désigne la plus grande hauteur de la bobine selon une direction en élévation sensiblement perpendiculaire à la direction de déplacement de la masse battante. Eventuellement, la bobine peut avoir une hauteur constante.

Dès lors, l'ouverture est plus haute que la bobine pour permettre le battement du batteur.

Selon un autre aspect, ladite au moins une ouverture peut s'étendre longitudinalement sur une longueur maximale et ladite bobine peut s'étendre longitudinalement sur une dimension longitudinale minimale, ladite dimension longitudinale minimale étant supérieure à la somme de la longueur maximale et d'un débattement longitudinal prédéterminé de la masse battante.

L'expression « longueur maximale » désigne la plus grande longueur de l'ouverture selon une direction longitudinale sensiblement parallèle à la direction de déplacement de la masse battante. Eventuellement, l'ouverture peut avoir une longueur constante.

L'expression « dimension longitudinale minimale » désigne la plus petite longueur de la bobine selon une direction longitudinale sensiblement parallèle à la direction de déplacement de la masse battante. Eventuellement, la bobine peut avoir une longueur constante.

Dès lors, l'ouverture est moins longue que la bobine pour permettre le déplacement de la masse battante le long du support de masse.

Selon un autre aspect, la masse battante peut comporter deux solides coopérant respectivement avec deux bobines du premier actionneur.

Cette caractéristique peut optimiser le guidage du déplacement de la masse battante.

Selon un autre aspect, le deuxième actionneur peut comporter un moteur relié par un système vis/écrou à la masse battante.

L'expression « système vis/écrou » désigne un système muni d'une vis sans fin et d'un écrou. Par exemple, l'écrou est rendu solidaire de la masse battante. Une rotation de la vis sans fin provoquée par le moteur induit alors une translation de l'écrou le long de la vis sans fin.

Selon un autre aspect, le deuxième calculateur peut être relié à une unité de mesure, l'unité de mesure transmettant au deuxième actionneur au moins une donnée représentant une vitesse de rotation d'un rotor excitant l'ensemble mécanique.

La position de la masse battante par rapport au support de masse peut résulter de la vitesse de rotation d'un rotor.

Selon un autre aspect, le premier calculateur peut appliquer /peut être configuré pour appliquer un algorithme de minimisation recevant en entrée ladite réponse vibratoire à minimiser par cet algorithme, ladite réponse vibratoire à minimiser étant injectée dans ledit algorithme de minimisation, ledit algorithme de minimisation émettant un premier signal de commande pour contrôler ledit premier actionneur.

De manière complémentaire ou alternative, le deuxième calculateur peut appliquer /peut être configuré pour appliquer un algorithme, par exemple à boucle fermée, fournissant une commande destinée au deuxième actionneur en fonction d'une vitesse de rotation d'un rotor excitant ledit ensemble mécanique.

Par exemple et afin de simplifier les algorithmes de pilotage, le deuxième actionneur peut être piloté en boucle ouverte via différents paramètres permettant ainsi de positionner la masse battante par rapport au support de masse sur une position optimale, sans boucle de retour potentiellement déstabilisante pour le premier actionneur.

De manière alternative, le deuxième actionneur peut être piloté en boucle fermée via une table de positions préétablies de la masse battante en fonction de la vitesse de rotation du rotor. Pour chaque vitesse de rotation, une position préétablie est mémorisée. Cette position préétablie de consigne est injectée dans une boucle de régulation et comparée à la position courante de la masse battante pour générer un signal d'erreur transmis au deuxième actionneur.

Le premier actionneur peut être éventuellement piloté via un algorithme de minimisation, comme l'algorithme connu sous l'expression « FxLMS » par exemple.

Il peut résulter des ces caractéristiques une architecture qui tend à éviter des risques d'interférence ou d'instabilité entre le pilotage des deux actionneurs.

Selon un autre aspect, le dispositif de suspension peut comprendre un élément élastique pour apporter une raideur entre l'ensemble mécanique et la structure porteuse.

Par exemple, un élément élastique de type lame est interposé entre le batteur et la boîte de transmission de puissance. Un élément élastique peut aussi être agencé entre le batteur et la structure à amortir.

Outre un dispositif de suspension, l'invention vise un aéronef.

Cet aéronef est muni d'une structure porteuse et d'un ensemble mécanique comprenant un rotor et une boîte de transmission de puissance entraînant en rotation ce rotor, l'ensemble mécanique comprenant au moins une barre de suspension s'étendant d'une extrémité supérieure articulée à la boîte de transmission de puissance vers une extrémité inférieure.

Cet aéronef comporte un dispositif de suspension selon l'invention, au moins une extrémité inférieure d'une barre de suspension étant articulée à un moyen de suspension du dispositif de suspension.

Par exemple, chaque barre de suspension peut être articulée à un moyen de suspension qui lui est propre.

L'invention et ses avantages apparaîtront avec plus de détails dans le cadre de la description qui suit avec des exemples donnés à titre illustratif en référence aux figures annexées qui représentent :
- la figure 1, un schéma illustrant un aéronef muni d'un dispositif de suspension,
- la figure 2, un schéma illustrant un moyen de suspension d'un dispositif de suspension,
- les figures 3 et 4, des vues présentant un premier actionneur de type électromagnétique,
- les figures 5 et 7, des vues présentant au moins partiellement des moyens de suspension en trois dimensions,
- la figure 6, une vue de dessus du support de masse de la figure 5, et
- la figure 8, une vue illustrant une bobine fixée à une lame.

Les éléments présents dans plusieurs figures distinctes sont affectés d'une seule et même référence.

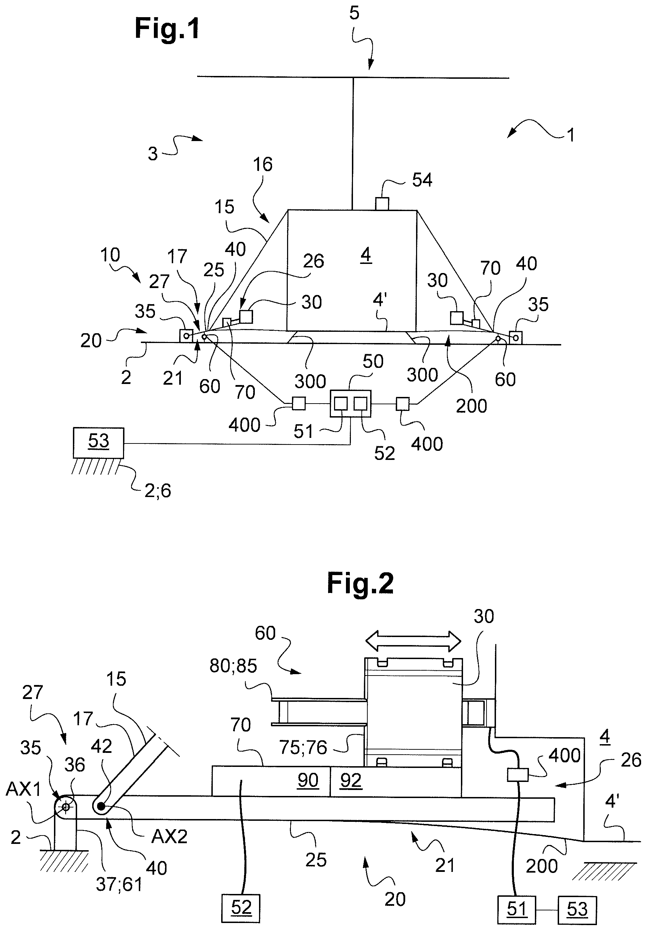

La figure 1 présente un aéronef 1 comportant une structure porteuse 2. Par exemple, la structure porteuse 2 peut prendre la forme d'un plancher.

De plus, l'aéronef 1 est muni d'un ensemble mécanique 3 fixé à la structure porteuse 2 pour participer notamment à la sustentation de l'aéronef 1.

Cet ensemble mécanique 3 inclut un rotor 5 participant au moins partiellement à la sustentation et/ou à la propulsion de l'aéronef. L'ensemble mécanique 3 peut aussi comprendre une boîte de transmission de puissance 4 qui est interposée entre le rotor 5 et une installation motrice non représentée sur les figures.

En effet, la représentation de l'aéronef sur les figures est délibérément incomplète pour ne pas alourdir inutilement ces figures.

La boîte de transmission de puissance 4, et notamment son fond 4', peut être liée à la structure porteuse 2 par le biais d'une membrane 300. Une telle membrane 300 peut être une membrane, par exemple métallique, autorisant les mouvements verticaux de la boîte de transmission de puissance ainsi que son pivotement autour d'un point de la membrane 300.

Cet aéronef 1 comprend un dispositif de suspension 10 qui vise d'une part à réduire les vibrations transmises par l'ensemble mécanique 3 à la structure porteuse 2, et d'autre part à relier l'ensemble mécanique 3 à la structure porteuse 2.

L'ensemble mécanique 3 inclut au moins une barre de suspension 15, voire au moins trois barres de suspension 15 pour sa fixation à la structure porteuse. Chaque barre de suspension s'étend alors d'une extrémité supérieure 16 vers une extrémité inférieure 17. Dès lors, chaque extrémité supérieure 16 est articulée à la boîte de transmission de puissance 4 et par exemple à une partie supérieure de cette boîte de transmission de puissance 4. Chaque extrémité inférieure 17 est reliée indirectement à la structure porteuse 2.

Dès lors, le dispositif de suspension 10 comporte au moins un moyen de suspension 20 interfacé entre une barre de suspension 15 et la structure porteuse 2. Par exemple, le dispositif de suspension comporte un moyen de suspension, par barre de suspension, articulé à la structure porteuse et à l'extrémité inférieure 17 de la barre de suspension correspondante.

Chaque moyen de suspension 20 comprend un batteur 21. Le batteur 21 est muni d'un support de masse 25 qui porte une masse battante 30, voire l'extrémité inférieure 17 d'une barre de suspension. Le support de masse 25 peut être comprendre au moins un levier, au moins une barre...

Le support de masse 25 s'étend alors longitudinalement d'un tronçon dit « tronçon proximal 27 » vers un tronçon dit « tronçon distal 26 ». Le tronçon distale 26 peut former une extrémité libre. La masse battante est alors portée par le tronçon distal 26 du batteur.

De plus, le tronçon proximal 27 peut être articulé à la barre de suspension et à la structure porteuse 2. Par exemple, le moyen de suspension est muni d'une première articulation 35 permettant d'articuler le support de masse 25 à la structure porteuse 2.

En référence à la figure 2, la première articulation 35 comporte éventuellement une liaison pivot permettant la rotation du support de masse, et de fait de la masse battante 30 autour d'une première direction AX1. Par suite, la première articulation peut comprendre une ferrure 37 pouvant être fixée à la structure porteuse 2. Un premier axe de pivot 36 de la première articulation peut alors traverser transversalement au moins une joue 61 de cette ferrure 37.

En outre, le moyen de suspension peut comprendre une deuxième articulation 40 pour articuler une barre de suspension 15 au support de masse 25, éventuellement à proximité de la première articulation 35. Par exemple, la deuxième articulation 40 est agencée dans le tronçon proximal.

Cette deuxième articulation 40 peut inclure au minimum une liaison pivot, voire une liaison à rotule. La deuxième articulation peut éventuellement être munie d'un deuxième axe de liaison 42. Le deuxième axe de liaison 42 peut traverser le support de masse 25 et la barre de suspension 15. Le deuxième axe de liaison 42 est dirigé selon une deuxième direction AX2 qui est éventuellement parallèle à la première direction AX1.

La deuxième articulation 40 est décalée par rapport à la première articulation 35 permettant ainsi une amplification cinématique du mouvement de la masse battante 30, provoqué par un mouvement relatif entre la structure porteuse 2 et la boîte de transmission de puissance 4 et par un premier actionneur décrit par la suite.

En outre, le dispositif de suspension peut comprendre un élément élastique 200 par moyen de suspension, qui apporte la raideur nécessaire pour reprendre une partie des efforts statiques transitant dans les barres de suspension 15. Cet élément élastique 200 est illustré sur la figure 2 par une lame travaillant en flexion, solidaire du batteur et reposant à son extrémité sur le fond 4' de la boîte de transmission de puissance. Eventuellement, la lame peut être fixée au support de masse et articulée à la boîte de transmission de puissance. La lame et le support de masse peuvent former deux portions d'une même pièce mécanique, la lame présentant une raideur en flexion plus faible que la raideur en flexion du support de masse.

Dans d'autres variantes, l'élément élastique 200 peut être constitué d'un tube de torsion monté au niveau de la première articulation 35 entre la ferrure 37 et le batteur 21, ou encore par le biais d'un ressort agencé entre un batteur 21 et la structure porteuse par exemple
Selon une variante une lame 200 comprend d'une part une première zone extrémale articulée à la structure porteuse et à une barre de suspension et, d'autre part, une deuxième zone extrémale articulée à la boîte de transmission de puissance. Le support de masse est alors solidarisé à la lame entre ces deux zones extrémales.

Selon un autre aspect, un moyen de suspension peut comprendre au moins un premier actionneur 60 générant des efforts dynamiques sur le batteur 21, par exemple pour contrôler l'amplitude et la phase du mouvement oscillatoire du batteur 21.

En référence à la figure 1, le dispositif de suspension 10 peut comprendre un premier actionneur 60 intégré à chaque moyen de suspension. Ce premier actionneur 60 peut être un actionneur hydraulique, pneumatique, électromécanique, électromagnétique, ou encore piézoélectrique.

Le dispositif de suspension 10 comporte en outre au moins un premier calculateur 51. Le premier calculateur 51 peut comprendre par exemple au moins un processeur, un circuit intégré, un système programmable, un circuit logique, ces exemples ne limitant pas la portée donnée à l'expression « premier calculateur ».

Le premier calculateur 51 est relié à un système de mesure 53 mesurant une réponse vibratoire. Ce système de mesure 53 peut mesurer la réponse vibratoire de la structure porteuse, ou de toute autre structure et par exemple une structure d'une cabine. La réponse vibratoire représente les vibrations de la structure porteuse, et peut notamment prendre la forme d'accélérations et/ou de déformations et/ou d'efforts. Dès lors, le système de mesure 53 peut éventuellement être muni d'accéléromètres, de capteurs d'effort et/ou de capteurs de déformation à jauges de contraintes. Par exemple, des accéléromètres sont solidarisés à la structure porteuse 2.

Chaque premier actionneur 60 communique alors avec un premier calculateur 51, le premier calculateur 51 contrôlant activement l'amplitude et la phase du mouvement du batteur 21 en générant un premier signal de commande donné au premier actionneur 60, le premier signal de commande étant fonction d'au moins un signal de mesure provenant du système de mesure 53.

Par exemple, le premier calculateur 51 applique un algorithme de minimisation recevant en entrée la réponse vibratoire à minimiser qui est fournie par le système de mesure 53. En sortie, le premier calculateur 51 délivre un premier signal de commande pilotant un amplificateur de puissance 400. Suivant l'ordre reçu, l'amplificateur de puissance 400 délivre un courant électrique particulier à au moins un organe du premier actionneur 60.

Le dispositif de suspension peut comprendre un premier calculateur pour chaque premier actionneur 60, ou encore un unique premier calculateur 51 contrôlant tous les premiers actionneurs 60 du dispositif de suspension 10.

Par ailleurs, la masse battante 30 est mobile en translation longitudinalement par rapport au support de masse 25. Dès lors, la masse battante peut coulisser parallèlement à une direction d'extension du support de masse 25. Cette direction d'extension s'étend du tronçon proximal au tronçon distal.

Pour déplacer la masse battante 30, le dispositif de suspension 10 comporte un deuxième actionneur 70. Le deuxième actionneur 70 est relié à la masse battante 30 pour déplacer longitudinalement la masse battante 30 par rapport au support de masse 25. Par exemple, le deuxième actionneur 70 comporte un moteur 90 relié par un système vis/écrou 92 à la masse battante 30.

De plus, le dispositif de suspension 10 comprend un deuxième calculateur 52 contrôlant le deuxième actionneur 70 pour régler la position de la masse battante 30 par rapport au support de masse 25, en éloignant ou en rapprochant la masse battante d'un bout du support de masse 25. Le deuxième calculateur 52 peut comprendre par exemple au moins un processeur, un circuit intégré, un système programmable, un circuit logique, ces exemples ne limitant pas la portée donnée à l'expression « deuxième calculateur ».

Le deuxième calculateur 52 peut être relié à une unité de mesure 54. Cette unité de mesure 54 peut transmettre au deuxième calculateur 52 au moins une donnée représentant une vitesse de rotation d'un rotor 5. Par exemple, l'unité de mesure 54 comporte un capteur de vitesse générant un signal représentant la vitesse de rotation du rotor.

Dès lors, le deuxième calculateur 52 applique un algorithme, par exemple à boucle fermée, fournissant un deuxième signal de commande transmis au deuxième actionneur, le deuxième signal de commande étant fonction de la vitesse de rotation du rotor 5. Un algorithme à boucle ouverte est envisageable.

Le dispositif de suspension peut comprendre un deuxième calculateur pour chaque deuxième actionneur 70, ou encore un unique deuxième calculateur 52 contrôlant tous les deuxièmes actionneurs 70 du dispositif de suspension 10.

En outre, au moins un premier calculateur et un deuxième calculateur peuvent former un seul et même calculateur.

Indépendamment de la réalisation et pour une vitesse de rotation particulière du rotor 5, le deuxième actionneur 70 positionne la masse battante dans une position prédéterminée par rapport à l'organe allongé 25. En présence de vibrations, le premier actionneur 60 excite alors le batteur en générant des efforts dynamiques sur ce batteur pour minimiser la réponse vibratoire mesurée par le système de mesure 53.

Selon un autre aspect, le premier actionneur 60 peut comporter un organe mobile 75 intégré à la masse battante 30 de manière à être solidaire en translation de la masse battante 30. De plus, le premier actionneur peut comporter un organe fixe 80 coopérant avec l'organe mobile 75, l'organe fixe 80 étant destiné à ne pas être fixé directement au support de masse 25. Par exemple, l'organe fixe peut être fixé à la boîte de transmission de puissance 4 ou à une lame distincte du support de masse.

Le deuxième actionneur 70 déplace ainsi en partie le premier actionneur 60 longitudinalement par rapport au support de masse 25 avec la masse battante 30. Plus précisément, le deuxième actionneur 70 permet le déplacement de l'organe mobile 75 du premier actionneur 60.

Le premier actionneur peut prendre la forme d'un actionneur hydraulique, pneumatique, électrique... Le premier actionneur peut agir sur le batteur en agissant sur le support de masse ou la masse battante.

En particulier, le premier actionneur 60 peut prendre la forme d'un actionneur électromagnétique. Ainsi, le premier actionneur 60 peut comporter au moins un organe aimanté 76 et au moins une bobine 85, l'organe aimanté 76 ou la bobine 85 représentant un organe mobile solidaire de la masse battante 30.

Selon l'exemple de la figure 2, l'organe aimanté est un organe mobile intégré à la masse battante 30 qui coopère avec une bobine. La bobine représente un organe fixe solidarisé à la boite de transmission de puissance 4. La bobine est alors alimentée électriquement sur ordre du premier calculateur associé.

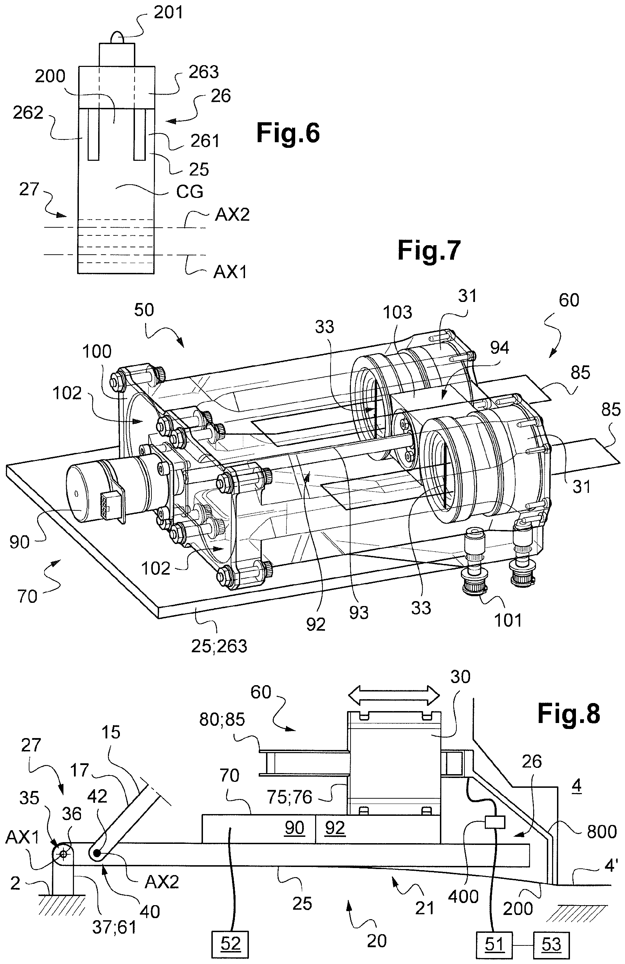

Selon l'exemple de la figure 8, la bobine est fixée par une attache 800 à une lame 200, par exemple au niveau ou à proximité d'un organe de liaison 201 de la lame 200 articulé à la boîte de transmission de puissance.

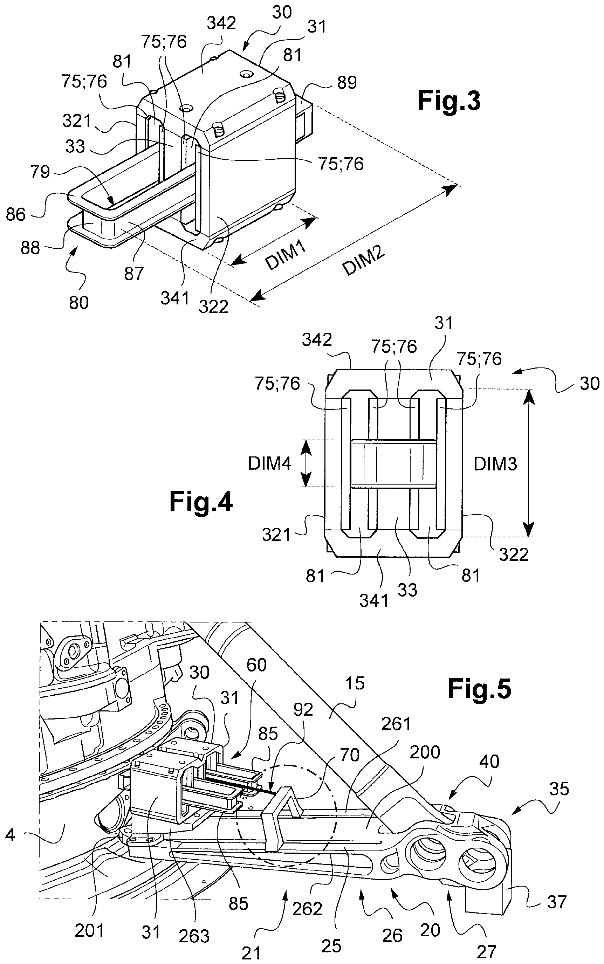

En référence à la figure 3, la masse comporte au moins un solide 31.

Dans le cadre d'un premier actionneur électromagnétique, le solide 31 peut inclure l'organe aimanté 76. L'organe aimanté est positionné au sein du solide de manière à être en regard d'une bobine 85.

Dès lors, le solide 31 possède un degré de liberté en translation par rapport au support de masse. Le solide est aussi libre d'effectuer une translation longitudinale le long d'au moins une bobine 85.

Pour parvenir à ce résultat, le solide 31 peut présenter au moins une ouverture 81 qui est traversée de part en part par un tronçon longitudinal 86, 87 de la bobine 85. Une telle ouverture peut être délimitée par des parois décrivant une boucle fermée autour de la bobine, ou peut avoir une forme ouverte en U par exemple.

En particulier, le solide 31 peut comporter quatre parois délimitant une ouverture, telle qu'une paroi latérale gauche, une paroi latérale droite, une paroi supérieure et une paroi inférieure, la bobine s'étendant entre ces parois.

Eventuellement, la bobine 85 peut aussi décrire une boucle fermée en forme de 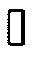 , autour d'un espace vide 79. Dès lors la bobine 85 est munie de deux tronçons longitudinaux 86, 87 reliés par deux branches transversales 88, 89. Circonférentiellement, la bobine 85 comprend alors un premier tronçon longitudinal 86, une première branche transversale 88, un deuxième tronçon longitudinal 87 et une deuxième branche transversale 89 rejoignant le premier tronçon longitudinal 86.

Dès lors, le solide 31 peut présenter au moins deux ouvertures 81 séparées transversalement par une cloison 33 du solide 31. Ainsi, le solide de la figure 3 comporte une paroi latérale gauche 321 et une paroi latérale droite 322. De plus, le solide présente une paroi supérieure 342 et une paroi inférieure 341 qui s'étendent chacune transversalement de la paroi latérale gauche 321 à la paroi latérale droite 322. Enfin, la cloison 33 s'étend en élévation de la paroi inférieure 341 à la paroi supérieure 342 en étant agencée transversalement entre la paroi latérale gauche 321 à la paroi latérale droite 322.

Ainsi, une première ouverture 81 est délimitée transversalement par la paroi latérale gauche 321 et la cloison 33, et en élévation par la paroi supérieure 342 et une paroi inférieure 341. Par contre, la première ouverture 81 est ouverte longitudinalement pour être traversée de part en part par un premier tronçon longitudinal 86.

De même, une deuxième ouverture est délimitée transversalement par la paroi latérale droite 322 et la cloison 33, et en élévation par la paroi supérieure 342 et la paroi inférieure 341. Par contre, la deuxième ouverture est ouverte longitudinalement pour être traversée de part en part par un deuxième tronçon longitudinal 87.

Les deux tronçons longitudinaux 86, 87 sont disposés transversalement de part et d'autre de la cloison 33.

Chaque ouverture 81 peut être délimitée au moins partiellement par au moins une face aimantée 76 de la masse battante 30. Par exemple, au moins une paroi de la masse battante est munie d'un aimant.

Par ailleurs, au moins une ouverture 81 s'étend longitudinalement sur une longueur maximale DIM1. En outre, la bobine 85 s'étend longitudinalement sur une dimension longitudinale minimale DIM2. Dès lors, la dimension longitudinale minimale DIM2 peut être supérieure à la somme de la longueur maximale DIM1 et d'un débattement longitudinal prédéterminé de la masse battante 30.

En référence à la figure 4, au moins une ouverture 81 s'étend en élévation sur une hauteur minimale DIM3 et la bobine 85 s'étend en élévation sur une dimension en élévation maximale DIM4. Dès lors, la hauteur minimale DIM3 peut être supérieure à la somme de la dimension en élévation maximale DIM4 et d'un débattement en élévation prédéterminé du support de masse 25.

Selon un autre aspect, la masse battante 30 peut comporter deux solides 31 qui coopèrent respectivement avec deux bobines 85 du premier actionneur 60.

La figure 5 illustre une réalisation de ce type. Le deuxième actionneur 70 est illustré schématiquement. Le moyen de suspension peut en outre comprendre un carénage non représenté agencé autour de la masse battante pour protéger cette masse battante de projections diverses.

Selon la figure 5, le moyen de suspension comporte un support de masse 25 et une lame 200 élastique formant une seule et même pièce unitaire.

En référence à la figure 6, le tronçon distal 26 peut comporter deux bras 261, 262 qui s'étendant longitudinalement à partir du tronçon proximal 27. La lame 200 s'étend alors longitudinalement à partir du tronçon proximal 27 entre les deux bras 261, 262.

Dès lors, le support de masse 25 inclut un pont 263 en U inversé qui s'étend d'un bras 261 à l'autre bras 262 en passant au dessus de la lame 200. La masse battante est alors agencée sur ce pont 263, par exemple de manière coulissante, par exemple de manière coulissante.

Par ailleurs, la lame 200 comporte par exemple un organe de liaison 201 articulé à la boîte de transmission de puissance pour relier cette lame 200 à la boîte de transmission de puissance.

Les deux bras 261, 262 peuvent être rigides, la lame 200 étant souple au regard des deux bras 261, 262.

La figure 7 illustre un moyen de suspension muni d'un organe pesant agencé sur un tronçon distal d'un support de masse 25. Par exemple, l'organe pesant est disposé sur un support de masse du type des figures 5 et 6, en étant par exemple fixé au pont 263.

Cet organe pesant comporte un carter 100 qui peut être fixé par des moyens usuels au support de masse 25, tels que des moyens de vissage et par exemple des goujons 101. Le carter 100 peut posséder divers organes fixés les uns aux autres.

Le carter 100 présente une face interne qui délimite un volume dit « volume interne ».

Ce volume interne peut comprendre un espace cylindrique 102 par solide 31 de la masse battante 30, et par exemple deux espaces cylindriques éventuellement séparés transversalement par un espace central. Dès lors, chaque espace cylindrique 102 est physiquement délimité partiellement par une face interne. De plus, cet espace cylindrique est localement ouvert sur l'espace central.

En outre, le deuxième actionneur comporte un moteur 90 fixé au carter 100. Ce moteur entraîne une vis sans fin 93, par exemple agencée dans l'espace central. Un écrou 94 est alors en prise sur la vis sans fin 93. L'écrou 94 est solidaire en translation et en rotation de chaque solide 31. Par exemple, l'écrou 94 est agencé dans un support 103 fixé aux solides 31.

Dès lors, lorsque la vis sans fin 93 induit la translation du support 103, chaque solide 31 de la masse battante est contraint à une translation au sein d'un espace cylindrique.

En outre, chaque solide 31 est traversé de part en part par une bobine 85. Chaque bobine 85 saille en dehors du carter 100, par exemple pour être fixée à une boîte de transmission de puissance.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif de suspension (10) antivibratoire destiné à un ensemble mécanique (3), le dispositif de suspension (10) étant muni d'au moins un moyen de suspension (20), le moyen de suspension (20) comprenant un batteur (21) effectuant un mouvement de balancier, le batteur (21) comprenant un support de masse (25), le batteur (21) comprenant une masse battante (30) portée par le support de masse (25), ledit moyen de suspension (20) comportant au moins un premier actionneur (60) générateur d'efforts dynamiques qui est destiné à générer un effort dynamique pour agir sur le mouvement de balancier du batteur (21), ledit dispositif de suspension (10) ayant au moins un premier calculateur (51) pour contrôler le premier actionneur (60), le premier calculateur (51) étant relié à un système de mesure (53) mesurant une réponse vibratoire pour régler ledit mouvement de balancier,
ladite masse battante (30) étant mobile en translation longitudinalement par rapport au support de masse (25), ledit dispositif de suspension (10) comportant un deuxième actionneur (70), le deuxième actionneur (70) étant relié à la masse battante (30) pour déplacer longitudinalement la masse battante (30) par rapport au support de masse (25), ledit dispositif de suspension (10) comprenant un deuxième calculateur (52) contrôlant ledit deuxième actionneur (70) pour régler une position de la masse battante (30) par rapport au support de masse (25).
**caractérisé en ce que** ledit premier actionneur (60) comporte au moins un organe aimanté (76) et au moins une bobine (85) électrique, ledit organe aimanté (76) ou ladite bobine (85) étant solidaire de la masse battante (30).

2. Dispositif de suspension selon la revendication 1,
**caractérisé en ce que** ledit premier actionneur (60) comporte un organe mobile (75) et un organe fixe (80), l'organe mobile (75) étant intégré à la masse battante (30) de manière à être solidaire en translation de la masse battante (30), l'organe fixe (80) étant destiné à ne pas être fixé au moyen de suspension (20).

3. Dispositif de suspension selon l'une quelconque des revendications 1 à 2,
**caractérisé en ce que** ladite masse battante (30) comporte au moins un solide (31) coulissant longitudinalement le long de la bobine (85), ledit solide (31) comprenant ledit organe aimanté (76), ledit organe aimanté (76) étant positionné en regard de la bobine (85).

4. Dispositif de suspension selon la revendication 3,
**caractérisé en ce que** ledit solide (31) présente au moins une ouverture (81) traversée de part en part par un tronçon longitudinal (86, 87) de la bobine (85).

5. Dispositif de suspension selon la revendication 4,
**caractérisé en ce que** ladite bobine (85) décrit une boucle fermée autour d'un espace vide (79) en présentant deux tronçons longitudinaux (86, 87) reliés par deux branches transversales (88, 89), ledit solide (31) présentant au moins deux ouvertures (81) séparées transversalement par une cloison (33) du solide (31), lesdits deux tronçons longitudinaux (86, 87) traversant respectivement lesdites deux ouvertures (81) en étant disposés transversalement de part et d'autre de ladite cloison (33).

6. Dispositif de suspension selon l'une quelconque des revendications 4 à 5,
**caractérisé en ce qu'**un dit organe aimanté comprenant une face aimantée (76) de la masse battante (30), au moins une dite ouverture (81) est délimitée au moins partiellement par au moins une dite face aimantée.

7. Dispositif de suspension selon l'une quelconque des revendications 4 à 6,
**caractérisé en ce que** ladite au moins une ouverture (81) s'étend en élévation sur une hauteur minimale (DIM3) et ladite bobine (85) s'étend en élévation sur une dimension en élévation maximale (DIM4), ladite hauteur minimale (DIM3) étant supérieure à la somme de la dimension en élévation maximale (DIM4) et d'un débattement en élévation prédéterminé du support de masse (25).

8. Dispositif de suspension selon l'une quelconque des revendications 4 à 7,
**caractérisé en ce que** ladite au moins une ouverture (81) s'étend longitudinalement sur une longueur maximale (DIM1) et ladite bobine (85) s'étend longitudinalement sur une dimension longitudinale minimale (DIM2), ladite dimension longitudinale minimale (DIM2) étant supérieure à la somme de la longueur maximale (DIM1) et d'un débattement longitudinal prédéterminé de la masse battante (30).

9. Dispositif de suspension selon l'une quelconque des revendications 1 à 8,
**caractérisé en ce que** ladite masse battante (30) comporte deux solides (31) coopérant respectivement avec deux bobines (85) du premier actionneur (60).

10. Dispositif de suspension selon l'une quelconque des revendications 1 à 9,
**caractérisé en ce que** ledit deuxième actionneur (70) comporte un moteur (90) relié par un système vis/écrou (92) à la masse battante (30).

11. Dispositif de suspension selon l'une quelconque des revendications 1 à 10,
**caractérisé en ce que** ledit deuxième calculateur (52) est relié à une unité de mesure (54), ladite unité de mesure (54) transmettant au deuxième actionneur (70) au moins une donnée représentant une vitesse de rotation d'un rotor (5) qui excite ledit ensemble mécanique (3).

12. Dispositif de suspension selon l'une quelconque des revendications 1 à 11,
**caractérisé en ce que** ledit premier calculateur (51) est configuré pour appliquer un algorithme de minimisation, ladite réponse vibratoire étant injectée dans ledit algorithme de minimisation, ledit algorithme de minimisation émettant un premier signal de commande pour contrôler ledit premier actionneur.

13. Dispositif de suspension selon l'une quelconque des revendications 1 à 12,
**caractérisé en ce que** ledit deuxième calculateur (52) est configuré pour appliquer un algorithme fournissant un deuxième signal de commande destiné au deuxième actionneur en fonction d'une vitesse de rotation d'un rotor (5) qui excite ledit ensemble mécanique (3).

14. Aéronef (1) muni d'une structure porteuse (2) et d'un ensemble mécanique (3) comprenant un rotor (5) et une boîte de transmission de puissance (4) entraînant en rotation ce rotor (5), ledit ensemble mécanique (3) comprenant au moins une barre de suspension (15) s'étendant d'une extrémité supérieure (16) articulée à la boîte de transmission de puissance (4) vers une extrémité inférieure (17),
**caractérisé en ce que** cet aéronef (1) comporte un dispositif de suspension (10) selon l'une quelconque des revendications 1 à 13, au moins une extrémité inférieure (17) d'une barre de suspension (15) étant articulée à un moyen de suspension (20) du dispositif de suspension (10).

15. Aéronef (1) selon la revendication 14,
**caractérisé en ce que** chaque barre de suspension (15) est articulée à un moyen de suspension (20) qui lui est propre.

## Patentansprüche

1. Schwingungsdämpfende Aufhängungsvorrichtung (10) für eine mechanische Baugruppe (3), wobei die Aufhängungsvorrichtung (10) mit mindestens einem Aufhängungsmittel (20) versehen ist, wobei das Aufhängungsmittel (20) einen Schwinger (21) umfasst, der eine Pendelbewegung ausführt, wobei der Schwinger (21) einen Masseträger (25) umfasst, wobei der Schwinger (21) eine von dem Masseträger (25) getragene schwingende Masse (30) umfasst, wobei die Aufhängungsvorrichtung (20) mindestens ein erstes Stellglied (60) zur dynamischen Krafterzeugung umfasst, das vorgesehen ist, um eine dynamische Kraft zum Einwirken auf die Pendelbewegung des Schwingers (21) zu erzeugen, wobei die Aufhängungsvorrichtung (10) mindestens einen ersten Rechner (51) zum Steuern des ersten Stellglieds (60) aufweist, und der erste Rechner (51) mit einem Messsystem (53) verbunden ist, das zum Regeln der Pendelbewegung eine Schwingungsantwort misst,
wobei die schwingende Masse (30) in Längsrichtung in Bezug auf den Masseträger (25) translatorisch beweglich ist, wobei die Aufhängungsvorrichtung (10) ein zweites Stellglied (70) aufweist, wobei das zweite Stellglied (70) mit der schwingenden Masse (30) verbunden ist, um die schwingende Masse (30) in Längsrichtung in Bezug auf den Masseträger (25) zu bewegen, wobei die Aufhängungsvorrichtung (10) einen zweiten Rechner (52) umfasst, der das zweite Stellglied (70) steuert, um eine Position der schwingenden Masse (30) in Bezug auf den Masseträger (25) einzustellen,
**dadurch gekennzeichnet, dass** das erste Stellglied (60) mindestens ein magnetisches Element (76) und mindestens eine elektrische Spule (85) umfasst, wobei das magnetische Element (76) oder die Spule (85) integral mit der schwingenden Masse (30) ist.

2. Aufhängungsvorrichtung nach Anspruch 1,
**dadurch gekennzeichnet, dass** das erste Stellglied (60) ein bewegliches Element (75) und ein feststehendes Element (80) umfasst, wobei das bewegliche Element (75) in die schwingende Masse (30) integriert ist, so dass es bei der Translation mit der schwingenden Masse (30) fest verbunden ist, und das feststehende Element (80) vorgesehen ist, um nicht an den Aufhängungsmitteln (20) befestigt zu sein.

3. Aufhängungsvorrichtung nach einem der Ansprüche 1 bis 2,
**dadurch gekennzeichnet, dass** die schwingende Masse (30) mindestens einen festen Körper (31) umfasst, der in Längsrichtung entlang der Spule (85) gleitet, wobei der feste Körper (31) das magnetische Element (76) umfasst, wobei das magnetische Element (76) gegenüber der Spule (85) positioniert ist.

4. Aufhängungsvorrichtung nach Anspruch 3,
**dadurch gekennzeichnet, dass** der feste Körper (31) mindestens eine Öffnung (81) aufweist, durch die ein Längsabschnitt (86, 87) der Spule (85) verläuft.

5. Aufhängungsvorrichtung nach Anspruch 4,
**dadurch gekennzeichnet, dass** die Spule (85) eine geschlossenen Schleife um einen leeren Raum (79) herum beschreibt, indem sie zwei Längsabschnitte (86, 87) aufweist, die durch zwei Queräste (88, 89) verbunden sind, wobei der feste Körper (31) mindestens zwei Öffnungen (81) aufweist, die quer durch eine Trennwand (33) des festen Körpers (31) getrennt sind, wobei die beiden Längsabschnitte (86, 87) jeweils durch die beiden Öffnungen (81) verlaufen, indem sie quer auf beiden Seiten der Trennwand (33) angeordnet sind.

6. Aufhängungsvorrichtung nach einem der Ansprüche 4 bis 5,
**dadurch gekennzeichnet, dass** ein magnetisches Element eine magnetische Fläche (76) der schwingenden Masse (30) umfasst und mindestens eine der Öffnungen (81) mindestens teilweise durch mindestens eine der magnetischen Flächen begrenzt ist.

7. Aufhängungsvorrichtung nach einem der Ansprüche 4 bis 8,
**dadurch gekennzeichnet, dass** sich die mindestens eine Öffnung (81) in ihrer Höhe über eine minimale Höhe (DIM3) erstreckt und die Spule (85) in der Vertikalen über eine maximale Höhenabmessung (D1M4) erstreckt, wobei die minimale Höhe (DIM3) größer ist als die Summe aus der maximalen Höhenabmessung (D1M4) und einem vorgegebenen vertikalen Spiel des Masseträgers (25).

8. Aufhängungsvorrichtung nach einem der Ansprüche 4 bis 7,
**dadurch gekennzeichnet, dass** sich die mindestens eine Öffnung (81) in Längsrichtung über eine maximale Länge (DIM1) erstreckt und sich die Spule (85) in Längsrichtung über eine minimale Längsabmessung (DIM2) erstreckt, wobei die minimale Längsabmessung (DIM2) größer ist als die Summe aus der maximalen Länge (DIM1) und einer vorgegebenen Längsbewegungsfreiheit der schwingenden Masse (30).

9. Aufhängungsvorrichtung nach einem der Ansprüche 1 bis 8,
**dadurch gekennzeichnet, dass** die schwingende Masse (30) zwei feste Körper (31) umfasst, die jeweils mit zwei Spulen (85) des ersten Stellglieds (60) zusammenwirken.

10. Aufhängungsvorrichtung nach einem der Ansprüche 1 bis 9,
**dadurch gekennzeichnet, dass** das zweite Stellglied (70) einen Motor (90) umfasst, der durch ein Schraube-Mutter-System (92) mit der schwingenden Masse (30) verbunden ist.

11. Aufhängungsvorrichtung nach einem der Ansprüche 1 bis 10,
**dadurch gekennzeichnet, dass** der zweite Rechner (52) mit einer Messeinheit (54) verbunden ist, wobei die Messeinheit (54) an das zweite Stellglied (70) mindestens eine Information über eine Drehzahl eines Rotors (5) sendet, der die mechanische Baugruppe (3) anregt.

12. Aufhängungsvorrichtung nach einem der Ansprüche 1 bis 11,
**dadurch gekennzeichnet, dass** der erste Rechner (51) konfiguriert ist, um einen Minimierungsalgorithmus anzuwenden, wobei die Schwingungsantwort in den Minimierungsalgorithmus eingespeist wird, wobei der Minimierungsalgorithmus ein erstes Steuersignal zum Steuern des ersten Stellglieds aussendet.

13. Aufhängungsvorrichtung nach einem der Ansprüche 1 bis 12,
**dadurch gekennzeichnet, dass** der zweite Rechner (52) konfiguriert ist, um einen Algorithmus anzuwenden, der ein zweites Steuersignal für das zweite Stellglied als Funktion einer Drehzahl eines Rotors (5) bereitstellt, der die mechanische Baugruppe (3) anregt.

14. Luftfahrzeug (1), das mit einer Tragkonstruktion (2) und einer mechanischen Baugruppe (3) versehen ist, die einen Rotor (5) und ein Leistungsgetriebe (4) umfasst, das diesen Rotor (5) drehantreibt, wobei die mechanische Baugruppe (3) mindestens eine Aufhängungsstange (15) umfasst, die sich von einem an das Leistungsgetriebe (4) angelenkten oberen Ende (16) zu einem unteren Ende (17) erstreckt,
**dadurch gekennzeichnet, dass** das Luftfahrzeug (1) eine Aufhängungsvorrichtung (10) nach einem der Ansprüche 1 bis 13 aufweist, wobei mindestens ein unteres Ende (17) einer Aufhängungsstange (15) an ein Aufhängungsmittel (20) der Aufhängungsvorrichtung (10) angelenkt ist.

15. Luftfahrzeug (1) nach Anspruch 14,
**dadurch gekennzeichnet, dass** jede Aufhängungsstange (15) mit einem eigenen Aufhängungsmittel (20) verbunden ist.

## Claims

1. An antivibratory suspension device (10) for a mechanical assembly (3), the suspension device (10) being equipped with at least one suspension means (20), the suspension means (20) comprising a flapper (21) performing a pendulum motion, the flapper (21) comprising a mass support (25), the flapper (21) comprising a flapping mass (30) supported by the mass support (25), said suspension means (20) comprising at least a first actuator (60) generating dynamic forces for generating a dynamic force for acting on the pendulum motion of the flapper (21), said suspension device (10) having at least a first computer (51) to control the first actuator (60), the first computer (51) being connected to a measurement system (53) measuring a vibratory response to adjust said pendulum motion,
said flapping mass (30) being mobile in translation longitudinally in relation to the mass support (25), said suspension device (10) comprising a second actuator (70) the second actuator (70) being linked to the flapping mass (30) to longitudinally displace the flapping mass (30) in relation to the mass support (25), said suspension device (10) comprising a second computer (52) controlling said second actuator (70) to adjust a position of the flapping mass (30) in relation to the mass support (25),
**characterised in that** the first actuator (60) comprises at least one magnetised part (76) and at least one electric coil (85), said magnetised part (76) or said coil (85) being integral with the flapping mass (30).

2. Suspension device according to Claim 1,
**characterised in that** said first actuator (60) comprises a moving part (75) and a fixed part (80), the moving part (75) being integral with the flapping mass (30) such as to be translationally fixed to the flapping mass (30), the fixed part (80) being intended not to be fixed to the suspension means (20).

3. Suspension device according to either of Claims 1 or 2,
**characterised in that** the flapping mass (30) comprises at least one solid (31) sliding longitudinally along the coil (85), said solid (31) comprising said magnetised part (76), said magnetised part (76) being positioned opposite the coil (85).

4. Suspension device according to Claim 3,
**characterised in that** said solid (31) has at least one opening (81) through which a longitudinal section (86, 87) of the coil (85) passes from one side to the other.

5. Suspension device according to Claim 4,
**characterised in that** said coil (85) describes a closed loop around an empty space (79) having two longitudinal sections (86, 87) connected by two transversal branches (88, 89), said solid (31) having at least two openings (81) separated transversally by a partition (33) of the solid (31), said two longitudinal sections (87, 87) traversing respectively said two openings (81) being disposed transversally either side of said partition (33) .

6. Suspension device according to either of Claims 4 or 5,
**characterised in that** a said magnetised part comprises a magnetised surface (76) of the flapping mass (30), and at least one said opening (81) is delimited at least partially by said magnetised surface.

7. Suspension device according to any one of Claims 4 to 6,
**characterised in that** said at least one opening (81) extends in elevation over a minimum height (DIM3) and said coil (85) extends in elevation over a dimension in maximum elevation (DIM4), said minimum height (DIM3) being greater than the sum of the dimension in maximum elevation (DIM4) and a predetermined articulation in elevation of the mass support (25).

8. Device according to any one of Claims 4 to 7,
**characterised in that** at least one opening (81) extends longitudinally over a maximum length (DIM1) and said coil (85) extends longitudinally over a minimum longitudinal dimension (DIM2), said minimum longitudinal dimension (DIM2) being greater than the sum of the maximum length (DIM1) and a predetermined longitudinal articulation of the flapping mass (30).

9. Suspension device according to any one of Claims 1 to 8,
**characterised in that** said flapping mass (30) comprises two solids (31) cooperating respectively with two coils (85) of the first actuator (60).

10. Suspension device according to any one of Claims 1 to 9, **characterised in that** said second actuator (70) comprises a motor (90) connected by a screw and nut system (92) to the flapping mass (30).

11. Suspension device according to any one of Claims 1 to 10,
**characterised in that** said second computer (52) is connected to a measuring unit (54), said measuring unit (54) transmitting to the second actuator (70) at least one piece of data representing a speed of rotation of a rotor (5) that excites said mechanical assembly (3).

12. Suspension device according to any one of Claims 1 to 11,
**characterised in that** said first computer (51) is configured to apply a minimisation algorithm, said vibratory response being injected into said minimisation algorithm, said minimisation algorithm emitting a first control signal for controlling said first actuator.

13. Suspension device according to any one of Claims 1 to 12,
**characterised in that** said second computer (52) is configured to apply an algorithm providing a second control signal for the second actuator as a function of a speed of rotation of a rotor (5) which excites said mechanical assembly (3).

14. Aircraft (1) having a carrier structure (2) and a mechanical assembly (3) including a rotor (5) and a power transmission gearbox (4) driving this rotor (5) in rotation, said mechanical assembly (3) comprising at least one suspension bar (15) extending from a top end (16) hinged to the power transmission gearbox (4) to a bottom end (17),
**characterised in that** this aircraft (1) comprises a suspension device (10) according to any one of Claims 1 to 13, at least one bottom end (17) of a suspension bar (15) being hinged to a suspension means (20) of the suspension device (10).

15. Aircraft (1) according to Claim 14,
**characterised in that** each suspension bar (15) is hinged to its own suspension (20).
